# EUROPÄISCHE PATENTANMELDUNG

(11) **EP 3 988 415 A1**
(43) Veröffentlichungstag der Anmeldung: **27.04.2022**
(21) Anmeldenummer: 21200828.8
(22) Anmeldetag: 04.10.2021
(51) Int. Cl.: B60W 40/06, B60W 40/064, G06V 20/56, B60T 8/00, B60W 30/02

(54) **VERFAHREN ZUM BETREIBEN EINES ASSISTENZSYSTEMS EINES KRAFTFAHRZEUGS, SOWIE ASSISTENZSYSTEM**

(30) Priorität: 26.10.2020 DE 102020213428
(71) Anmelder: VOLKSWAGEN AG, 38440 Wolfsburg (DE)
(72) Erfinder: Bartels, Arne, 38448 Wolfsburg (DE); Bärecke, Frank, 38444 Wolfsburg (DE); Klingemann, Timo, 38524 Sassenburg (DE); Kolms, Thomas, 38553 Wasbüttel (DE)

(57) **Zusammenfassung**

Die Erfindung betrifft ein Verfahren zum Betreiben eines Assistenzsystems (2) eines Kraftfahrzeugs (1), bei welchem mittels zumindest einer Erfassungseinrichtung (4, 5, 6) des Assistenzsystems (2) eine Bankettfahrt (8) des Kraftfahrzeugs (1) auf einem Straßenbankett (9) erfasst wird, und bei welchem in Abhängigkeit von der erfassten Bankettfahrt (8) ein Steuersignal (10) zum Eingriff in eine Funktionseinheit (11) des Kraftfahrzeugs (1) mittels einer elektronischen Recheneinrichtung (3) des Assistenzsystems (2) erzeugt wird, wobei das erfasste Straßenbankett (9) bezüglich einer Bankettart ausgewertet wird und in Abhängigkeit von der bestimmten Bankettart eine kritische oder eine unkritische Bankettfahrt (8) für das Kraftfahrzeug (1) bestimmt wird und das Steuersignal (10) nur bei einer kritischen Bankettfahrt (8) erzeugt wird. Ferner betrifft die Erfindung ein Assistenzsystem (2).

## Beschreibung

Die Erfindung betrifft ein Verfahren zum Betreiben eines Assistenzsystems eines Kraftfahrzeugs, bei welchem mittels zumindest einer Erfassungseinrichtung des Assistenzsystems eine Bankettfahrt des Kraftfahrzeugs auf einem Straßenbankett erfasst wird, und bei welchem in Abhängigkeit von der erfassten Bankettfahrt ein Steuersignal zum Eingriff in eine Funktionseinheit des Kraftfahrzeugs mittels einer elektronischen Recheneinrichtung des Assistenzsystems erzeugt wird. Ferner betrifft die Erfindung ein Assistenzsystem.

Aus dem Stand der Technik sind bereits Assistenzsysteme bekannt, welche eine Bankettfunktion aufweisen und dabei Schleuderunfälle verhindern, wenn das Kraftfahrzeug auf einen unbefestigten Seitenstreifen neben der Fahrbahn abkommt, wobei der unbefestigte Seitenstreifen auch als Bankett bezeichnet werden kann. Die Funktionsweise ist derart, dass wenn eine Bankettfahrt erkannt wird und der Fahrer mit einer schnellen Lenkbewegung versucht, aus dem Bankett herauszulenken, dann wird durch ein radselektives Abbremsen der auf dem Bankett fahrenden Räder ein Schleudern des Kraftfahrzeugs verhindert. Der physikalische Effekt, warum es bei Bankettfahrten zu Schleuderunfällen kommt, beruht auf dem Übergang der Räder von einem Untergrund mit niedrigem Reibwert - wie zum Beispiel einem Bankett mit Gras oder Sand - zu einem Untergrund mit hohem Reibwert - wie zum Beispiel einer Fahrbahn mit Asphalt oder Beton. Bei diesem Reibwertsprung werden in Verbindung mit einer starken Lenkreaktion des Fahrers schlagartig hohe Seitenkräfte der vorher auf dem Bankett fahrenden Räder auf den Asphalt übertragen. Dies führt zu einem Gier-Moment, welches ein Übersteuern des Kraftfahrzeugs bewirkt. Beherrscht der Fahrer des Kraftfahrzeugs das übersteuernde Fahrzeug nicht, dann es zu einem Schleuderunfall kommen.

Die US 2020/0066146 A1 offenbart ein Informationssystem, das eine Steuerung umfasst, die so konfiguriert ist, dass sie ein Erfassen eines Bildschirmbildes eines auf einer Fahrbahn fahrenden Fahrzeugs durchführt, wobei das Bildschirmbild mit Hilfe einer Bildaufnahmeeinheit fotografiert wird. Es erfolgt ein Erkennen eines gefährlichen Fahrzustands des fahrenden Fahrzeugs in Übereinstimmung mit einem zeitlich Verlauf des Bildschirmbildes. Es werden Informationen in Bezug auf das Fahrzeug angezeigt, von dem erkannt wurde, dass es sich in dem gefährlichen Fahrzustand befindet.

Aufgabe der vorliegenden Erfindung ist es, ein Verfahren sowie ein Assistenzsystem zu schaffen, mittels welchen ein Nutzer eines Kraftfahrzeugs verbessert in einer Assistenzfunktion unterstützt wird.

Diese Aufgabe wird durch ein Verfahren sowie durch ein Assistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Assistenzsystems eines Kraftfahrzeugs, bei welchem mittels zumindest einer Erfassungseinrichtung des Assistenzsystems eine Bankettfahrt des Kraftfahrzeugs auf einem Straßenbankett erfasst wird, und bei welchem in Abhängigkeit von der erfassten Bankettfahrt ein Steuersignal zum Eingriff in eine Funktionseinheit des Kraftfahrzeugs mittels einer elektronischen Recheneinrichtung des Assistenzsystems erzeugt wird.

Es ist vorgesehen, dass das erfasste Straßenbankett bezüglich einer Bankettart ausgewertet wird und in Abhängigkeit von der bestimmten Bankettart eine kritische oder eine unkritische Bankettfahrt für das Kraftfahrzeug bestimmt wird und das Steuersignal nur bei einer kritischen Bankettfahrt erzeugt wird.

Insbesondere kann somit ein Nutzer des Kraftfahrzeugs, welches insbesondere ein Fahrer des Kraftfahrzeugs sein kann, zuverlässig in der Assistenzfunktion unterstützt werden. Insbesondere wird somit eine sogenannte Bankettfunktion des Kraftfahrzeugs nur dann ausgelöst, wenn beispielsweise die rechten oder die linken Räder auf einem Bankett fahren, dessen Oberfläche einen niedrigeren Reibwert aufweist, zum Beispiel Gras, Sand oder Schotter, und die jeweils anderen Räder auf einer Oberfläche mit hohem Reibwert fahren, wie zum Beispiel Asphalt oder Beton. Ein Auslösen der Bankettfunktion soll dagegen nicht erfolgen, wenn die rechten oder linken Räder im Bankett auf einem Bankett fahren, dessen Oberfläche einen hohen Reibwert aufweist, wie zum Beispiel Kopfstein, Blaubasalt, Rasengittersteine, Rasenkunststoffgitter oder Rüttelstreifen, und die jeweils anderen Räder auf einer Oberfläche mit hohem Reibwert fahren, wie zum Beispiel Asphalt oder Beton. Ferner sollen unnötige Falschauslösungen der Bankettfunktion durch zum Beispiel Unebenheiten in der Fahrbahnoberfläche oder spezifische Strukturen auf der Fahrbahnoberfläche verhindert werden. Unter Bankettfunktion ist insbesondere zu verstehen, dass wenn eine Bankettfahrt erkannt wird und der Fahrer mit einer schnellen Lenkbewegung versucht, aus dem Bankett herauszulenken, dann wird durch ein radselektives Abbremsen, was insbesondere dem Eingriff in die Funktionseinheit entspricht, der auf dem Bankett fahrenden Räder das Schleudern des Kraftfahrzeugs verhindert.

Insbesondere wird somit, sollte beispielsweise kein starker Reibwertsprung zwischen Bankett und Fahrbahn vorliegen, ein Auslösen der Bankettfunktion verhindert. Ein unnötiges Auslösen in dieser Situation wird somit verhindert werden. Daher werden die Sensoren zur Bankettfahrerkennung zwischen den oben beschriebenen Szenarien beziehungsweise zwischen den oben beschriebenen unterschiedlichen Bankettarten unterscheiden.

Insbesondere ist somit vorgeschlagen, dass eine Klassifizierung durchgeführt wird, ob eine Bankettfahrt vorliegt. Sollte eine Bankettfahrt vorliegen, so wird ausgewertet, um welche Bankettart es sich handelt. Sollte ein Bankett mit einem niedrigen Reibwert, beispielsweise bestehend aus Gras, Sand oder Schotter, bestimmt werden, so handelt es sich insbesondere um eine kritische Bankettfahrt. Sollte dagegen ein Bankett mit hohem Reibwert, beispielsweise bestehend aus Kopfstein, Blaubasalt, Rasengittersteinen, Rasenkunststoffgitter oder Rüttelstreifen, erfasst werden, so handelt es sich um eine unkritische Bankettfahrt.

Gemäß einer vorteilhaften Ausgestaltungsform wird mittels eines maschinellen Lernens der elektronischen Recheneinrichtung das Straßenbankett bezüglich der Bankettart ausgewertet. Insbesondere erfolgt somit die Klassifizierung der Bankettarten über eine Mustererkennung durch eine Auswertung der jeweiligen Sensormessdaten der Erfassungseinrichtung mit Hilfe einer sensorspezifischen Auswertung. Die Auswertungs-Software wird insbesondere mit Hilfe von Lerndaten auf die oben beschriebene Klassifizierung der Bankettarten trainiert. Lerndaten sind die zeitlichen Verläufe der jeweiligen Sensormessdaten, welche während einer Messfahrt beim Befahren der oben genannten unterschiedlichen Bankettarten aufgenommen werden. Bei dem maschinellen Lernen kann es sich beispielsweise auch um ein neuronales Netzwerk handeln. Dabei können Informationen, beispielsweise ob eine Bankettfahrt vorliegt oder nicht sowie die Bankettart, an eine entsprechende Auswertung der elektronischen Recheneinrichtung des jeweiligen Sensors über einen Datenbus an einen Datenfusionsalgorithmus, welcher insbesondere in der elektronischen Recheneinrichtung bereitgestellt ist, übermittelt werden. Aus den Eingangsdaten der Erfassungseinrichtung bestimmt dann dieser Datenfusionsalgorithmus, ob eine Bankettfahrt vorliegt und ob eine kritische Bankettart, welche durch den niedrigen Reibwert bestimmt ist, vorliegt. Ist beides der Fall, so sendet der Datenfusionsalgorithmus diese Information an einen Auslösealgorithmus. Wenn zeitgleich eine starke Lenkreaktion des Fahrers zum Verlassen des Banketts erkannt wird, so aktiviert dieser Auslösealgorithmus wiederum die Bankettfunktion, was insbesondere ein radselektives Bremsen der auf dem Bankett fahrenden Räder mittels beispielsweise eines elektronischen Stabilisierungsprogramms (ESP) durchgeführt wird.

In einer weiteren vorteilhaften Ausgestaltungsform wird mittels einer Kamera als Erfassungseinrichtung das Straßenbankett erfasst. Insbesondere handelt es sich bei der Kamera um eine frontseitig angeordnete Kamera am Kraftfahrzeug. Insbesondere können mittels der Kamera Bildsequenzen aufgenommen werden, und beispielsweise durch einen Bildbearbeitungsalgorithmus entsprechend das Straßenbankett erfasst werden. Bei der Kamera handelt es sich insbesondere um eine bereits am Kraftfahrzeug ausgebildete Erfassungseinrichtung, so dass diese zuverlässig genutzt werden kann, ohne einen Mehraufwand bei der Herstellung des Kraftfahrzeugs verzeichnen zu müssen.

Weiterhin vorteilhaft ist, wenn auf Basis von unterschiedlichen Bildmustern der Bankettarten eine Auswertung bezüglich der Bankettarten durchgeführt wird. Insbesondere kann beim Anlernen einer Bilddaten-Auswertungs-Software ausgenutzt werden, dass die unterschiedlichen Bankettarten in den Bildsequenzen der Kameradaten spezifische Bildmuster erzeugen, welchen den jeweiligen Bankettarten zugeordnet werden können, und diese somit voneinander differenzieren. Nach dem Training kann die Bilddaten-Auswertungs-Software die Messdaten, welche während der Fahrt mit der nach vorne gerichteten Kamera erfasst worden sind, den unterschiedlichen Bankettarten zuordnen beziehungsweise in diese klassifizieren.

In einer weiteren vorteilhaften Ausgestaltungsform wird mittels zumindest zweier Raddrehzahlsensoren an unterschiedlichen Rädern des Kraftfahrzeugs als Erfassungseinrichtung das Straßenbankett erfasst. Insbesondere kann mittels vier Raddrehzahlsensoren an unterschiedlichen Rädern des Kraftfahrzeugs das Straßenbankett erfasst wird. Insbesondere weist das Kraftfahrzeug vier Räder auf, wobei sich an jedem Rad davon ein jeweiliger Raddrehzahlsensor befindet. Auf Basis einer jeweilige Auswertung der Raddrehzahlsensoren beziehungsweise der erfassten Raddrehzahlen der einzelnen Räder, kann zuverlässig bestimmt werden, ob sich das Kraftfahrzeug auf einem Straßenbankett befindet.

Ferner hat es sich als vorteilhaft erwiesen, wenn auf Basis von zeitlichen Verläufen der zumindest zwei Raddrehzahlsensoren und durch Vergleich der zeitlichen Verläufe eine Auswertung bezüglich der Bankettarten durchgeführt wird. Insbesondere können dabei die Sensormessdaten der Raddrehzahlsensoren die zeitlichen Verläufe der Raddrehzahl der Räder des Kraftfahrzeugs erfassen. Bei der Fahrt auf rauen Oberflächen, wie man sie zum Beispiel bei einer Bankettfahrt vorfindet, schwankt der zeitliche Verlauf dieser Raddrehzahlsensor-Messdaten stark, obwohl die Fahrzeuggeschwindigkeit während der Bankettfahrt praktisch unverändert bleibt. Beim Anlernen der Raddrehzahldaten-Auswertungs-Software wird ausgenutzt, dass die unterschiedlichen Bankettarten spezifische Muster beziehungsweise spezifische Schwankungen der zeitlichen Verläufe der Raddrehzahlsensor-Messdaten erzeugen, welche den jeweiligen Bankettarten zugeordnet werden können, und diese somit voneinander differenzieren. Viele der Bankettoberflächen mit hohen Reibwerten, beispielsweise Rüttelstreifen aus Betonplatten, Fahrstreifenmarkierungslinien, Rasengittersteine oder dergleichen weisen zudem regelmäßige Strukturen auf, welche sich in den Sensormessdaten der Raddrehzahlsensoren wiederspiegeln. Nach dem Training kann eine Raddrehzahldaten-Auswertungs-Software die Messdaten, welche während der Fahrt mit den Raddrehzahlsensoren erfasst worden sind, den unterschiedlichen Bankettarten zuordnen beziehungsweise in diese klassifizieren.

Gemäß einer weiteren vorteilhaften Ausgestaltungsform wird mittels zumindest zweier Höhenstandssensoren an unterschiedlichen Rädern des Kraftfahrzeugs als Erfassungseinrichtung das Straßenbankett erfasst. Insbesondere kann das Kraftfahrzeug vier Höhenstandssensoren am jeweiligen Rad des Kraftfahrzeugs aufweisen. Diese Sensormessdaten der Höhenstandssensoren sind zeitliche Verläufe der Höhenstände der vier Räder des Kraftfahrzeugs. Auf rauen Untergrund schwankt der zeitliche Verlauf dieser Sensormessdaten. Beim Anlernen einer Höhenstandsdaten-Auswertungs-Software wird ausgenutzt, dass die unterschiedlichen Bankettarten spezifische Muster beziehungsweise spezifische Schwankungen der zeitlichen Verläufe der Höhenstandssensor-Messdaten erzeugen, welchen den jeweiligen Bankettarten zugeordnet werden können und diese somit voneinander differenzieren. Viele der Bankettoberflächen mit hohem Reibwert, beispielsweise Rüttelstreifen aus Betonplatte, Fahrstreifenmarkierungslinien, Rasengittersteine und dergleichen, weisen zudem regelmäßige Strukturen auf, welche sich in den Sensormessdaten der Höhenstandssensoren wiederspiegeln. Nach dem Training kann eine Höhenstandsdaten-Auswertungs-Software die Messdaten, welche während der Fahrt mit den Höhenstandssensoren erfasst worden sind, den unterschiedlichen Bankettarten zuordnen beziehungsweise in diese klassifizieren.

Ebenfalls vorteilhaft ist, wenn mittels zumindest zweier Höhenstandssensoren und/oder zweier Raddrehzahlsensoren an gegenüberliegenden Rädern des Kraftfahrzeugs als Erfassungseinrichtung das Straßenbankett erfasst wird. Unter "gegenüberliegend" ist insbesondere zu verstehen, sollte das Kraftfahrzeug beispielsweise vier Räder aufweisen, so sind beispielsweise zwei Räder auf der linken Seite und zwei Räder auf der rechten Seite zu verzeichnen. Insbesondere können dann die zumindest zwei Höhenstandssensoren an einem der linken Räder und an einem der rechten Räder beziehungsweise ein Raddrehzahlsensor an einem der linken Räder und ein Raddrehzahlsensor an einem der rechten Räder angeordnet sein. Zur Klassifizierung, ob eine Bankettfahrt vorliegt oder nicht, werden insbesondere somit auch die Messdaten der Raddrehzahlsensoren und/oder die Messdaten der Höhenstandssensoren der linken und der rechten Räder miteinander verglichen. Wenn die Messdaten der Raddrehzahlsensoren und/oder die Messdaten der Höhenstandssensoren sowohl der linken als auch der rechten Räder auf einen rauen Untergrund hindeuten, dann fährt das Kraftfahrzeug sehr wahrscheinlich nicht im Bankett, sondern auf einem Kopfsteinpflaster, Feldweg oder einer anderen Schlechtwegstrecke. Wenn die Messdaten der Raddrehzahlsensoren und/oder die Messdaten der Höhenstandssensoren entweder der linken oder der rechten Räder auf einen rauen Untergrund hindeuten, dann fährt das Fahrzeug potentiell entweder mit den linken oder mit den rechten Rädern im Bankett. Ob dies kritisch ist, muss, wie bereits beschrieben, mit Hilfe der jeweiligen Auswertungs-Software ermittelt werden.

In einer weiteren vorteilhaften Ausgestaltungsform wird eine Fahrbahnoberfläche der Straße, auf welcher sich das Kraftfahrzeug befindet, erfasst, und die Fahrbahnoberfläche wird bei der Auswertung der Bankettfahrt berücksichtigt. Insbesondere können somit potentiell kritische Sondersituationen, wie zum Beispiel eine Fahrbahn aus Kopfsteinpflaster, welche einen hohen Reibwert und eine raue Oberfläche aufweist, und ein Bankett aus Gras oder Sand, welcher einen niedrigen Reibwert im Vergleich zur Fahrbahn und eine weniger raue Oberfläche aufweist, ebenfalls über eine gleichzeitige Klassifizierung der Oberflächen von Fahrbahn und Bankett mit Hilfe des beschriebenen Verfahrens erfolgen. Ferner können auch spezifische Strukturen auf der Fahrbahnoberfläche, welche durch zum Beispiel Reflexionen, Schattenwurf und Spuren erzeugt werden, ebenfalls zu einer Falscherkennung der Bankettfahrt durch die Kamera führen. Da auch für diese spezifischen Strukturen auf der Fahrbahnoberfläche Lerndaten erzeugt werden können, kann die Bilddaten-Auswertungs-Software der Kamera auf diese so trainiert werden, dass diese spezifischen Strukturen als unkritisch klassifiziert werden. Die Falscherkennung einer Bankettfahrt bei spezifischen Strukturen auf der Fahrbahnoberfläche kann so verhindert werden. Ferner können Unebenheiten in der Fahrbahnoberfläche, wie zum Beispiel Gullideckel, Straßenschäden, beispielsweise Schlaglöcher, Flickstellen im Asphalt, Teernähte, starke Wellen im Asphalt oder in den Asphalt eingelassenen Botts Dots ebenfalls zu einer Falscherkennung der Bankettfahrt durch die Raddrehzahlsensoren führen. Da auch diese Unebenheiten jeweils spezifische Muster von Messdaten erzeugen, kann die Raddrehzahl-Auswertungs-Software und/oder Höhenstands-Auswertungs-Software auf diese so trainiert werden, dass diese als unkritisch klassifiziert werden. Die Falscherkennung einer Bankettfahrt bei Unebenheiten in der Fahrbahnoberfläche kann so verhindert werden.

Bei dem vorgestellten Verfahren handelt es sich insbesondere um ein computerimplementiertes Verfahren. Hierzu betrifft ein weiterer Aspekt der Erfindung ein Computerprogrammprodukt mit Programmcodemitteln, welche, wenn diese auf einer elektronischen Recheneinrichtung ausgeführt werden, die elektronische Recheneinrichtung dazu veranlassen, das erfindungsgemäße Verfahren durchzuführen. Das Computerprogrammprodukt kann auf einem computerlesbaren Speichermedium abgespeichert sein, wobei das computerlesbare Speichermedium wiederum auf der elektronischen Recheneinrichtung ausgebildet sein kann.

Ein weiterer Aspekt der Erfindung betrifft ein Assistenzsystem für ein Kraftfahrzeug mit zumindest einer elektronischen Recheneinrichtung und einer Erfassungseinrichtung, wobei das Assistenzsystem zum Durchführen eines Verfahrens nach dem vorhergehenden Aspekt ausgebildet ist. Insbesondere wird das Verfahren mittels des Assistenzsystems durchgeführt.

Ein nochmals weiterer Aspekt der Erfindung betrifft ein Kraftfahrzeug mit einem Assistenzsystem nach dem vorhergehenden Aspekt.

Zu der Erfindung gehören auch Weiterbildungen des erfindungsgemäßen Assistenzsystems sowie des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Assistenzsystems sowie des erfindungsgemäßen Kraftfahrzeugs hier nicht noch einmal beschrieben.

Die Erfindung umfasst auch die Kombination der Merkmale der beschriebenen Ausführungsformen.

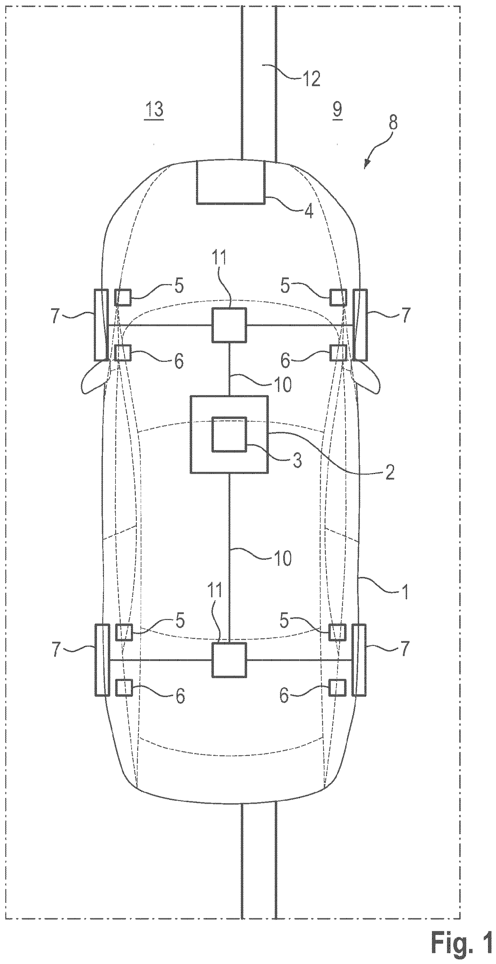

Im Folgenden werden Ausführungsbeispiele der Erfindung beschrieben. Hierzu zeigt die einzige Fig. 1 eine schematische Draufsicht auf eine Ausführungsform eines Kraftfahrzeugs mit einer Ausführungsform eines Assistenzsystems.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In der Figur sind funktionsgleiche Elemente jeweils mit denselben Bezugszeichen versehen.

Fig. 1 zeigt eine schematische Draufsicht auf eine Ausführungsform eines Kraftfahrzeugs 1 mit einer Ausführungsform eines Assistenzsystems 2. Das Assistenzsystem 2 weist eine elektronische Recheneinrichtung 3 auf. Ferner weist das Assistenzsystem 2 zumindest eine Erfassungseinrichtung 4, 5, 6 auf. Beispielsweise kann das Assistenzsystem 2 eine Kamera 4 als Erfassungseinrichtung 4, 5, 6 aufweisen. Ferner kann vorgesehen sein, dass an einem jeweiligen Rad 7 des Kraftfahrzeugs 1 ein jeweiliger Raddrehzahlsensor 5 als Erfassungseinrichtung 4, 5, 6 und/oder ein jeweiliger Höhenstandssensor 6 als Erfassungseinrichtung 4, 5, 6 ausgebildet sein kann.

Mittels des Assistenzsystems 2 kann insbesondere eine Bankettfahrt 8 des Kraftfahrzeugs 1 auf einem Straßenbankett 9 identifiziert werden. Insbesondere wird dabei mittels der zumindest einen Erfassungseinrichtung 4, 5, 6 die Bankettfahrt 8 auf dem Straßenbankett 9 erfasst, und es wird in Abhängigkeit von der erfassten Bankettfahrt 8 ein Steuersignal 10 zum Eingriff in eine Funktionseinheit 11 des Kraftfahrzeugs 1 mittels der elektronischen Recheneinrichtung 3 erzeugt.

Es ist dabei vorgesehen, dass das erfasste Straßenbankett 9 bezüglich einer Bankettart ausgewertet wird und in Abhängigkeit von der bestimmten Bankettart eine kritische oder eine unkritische Bankettfahrt 8 für das Kraftfahrzeug 1 bestimmt wird und das Steuersignal 10 nur bei einer kritischen Bankettfahrt 8 erzeugt wird.

Insbesondere kann vorgesehen sein, dass mittels eines maschinellen Lernens der elektronischen Recheneinrichtung 3 das Straßenbankett 9 bezüglich der Bankettart ausgewertet wird.

Mittels des vorliegenden Assistenzsystems 2 erfolgt somit insbesondere eine Klassifizierung, ob eine Bankettfahrt 8 vorliegt, und falls ja, welche Bankettart vorliegt. Beispielsweise kann bei einem Bankett mit einem niedrigen Reibwert, welches insbesondere als kritisch bezeichnet werden kann, gebildet aus Gras, Sand, Schotter oder dergleichen bestimmt werden. Ferner kann ein Bankett mit einem hohen Reibwert, was insbesondere unkritisch ist, gebildet aus Kopfstein, Blaubasalt, Rasengittersteinen, Rasenkunststoffgitter oder Rüttelstreifen, erfasst werden. Die Klassifizierung der Bankettart über Mustererkennung erfolgt dabei insbesondere durch eine Auswertung der jeweiligen Sensormessdaten mit Hilfe einer sensorspezifischen Auswertungs-Software. Insbesondere können die Erfassungseinrichtungen 4, 5, 6 dabei als Sensoren betrachtet werden. Die Auswertungs-Software wird mit Hilfe von Lerndaten auf die oben beschriebenen Klassifizierung der Bankettarten trainiert. Lerndaten sind die zeitlichen Verläufe der jeweiligen Sensormessdaten, welche während einer Messfahrt beim Befahren der oben genannten unterschiedlichen Bankettarten aufgenommen werden. Das Training der Auswertungs-Software erfolgt mit Hilfe bekannter Verfahren, insbesondere mittels eines maschinellen Lernens.

Diese Informationen, ob eine Bankettfahrt 8 vorliegt, und die Bankettart sind die Eingangsdaten für eine jeweilige Auswertungs-Software des jeweiligen Sensors beziehungsweise der jeweiligen Erfassungseinrichtung 4, 5, 6, welche über einen Datenbus an einen Datenfusionsalgorithmus, welcher insbesondere in der elektronischen Recheneinrichtung 3 ausgebildet ist, verbunden. Aus den Eingangsdaten der Erfassungseinrichtungen 4, 5, 6 bestimmt dieser Datenfusionsalgorithmus, ob eine Bankettfahrt 8 vorliegt und ob eine kritische Bankettart mit niedrigem Reibwert vorliegt. Ist beides der Fall, so sendet der Datenfusionsalgorithmus diese Information an einen Auslösealgorithmus. Wenn zeitgleich eine starke Lenkreaktion des Fahrers zum Verlassen des Straßenbanketts 9 erkannt wird, so aktiviert dieser Auslösealgorithmus die Bankettfunktion, was insbesondere durch das Steuersignal 10 dargestellt ist. Insbesondere kann ein radselektives Bremsen auf dem Straßenbankett 8 der Räder 7 mittels eines elektronischen Stabilisierungssystems durchgeführt werden, wobei das elektronische Stabilisierungssystem (ESP) insbesondere der Funktionseinheit 11 entspricht.

Die Bankettart kann dabei insbesondere auf Basis der unterschiedlichen Erfassungseinrichtungen 4, 5, 6 durchgeführt werden. Beispielsweise kann mit Hilfe der nach vorne gerichteten Kamera 4 das Überschreiten von Fahrbahnbegrenzungslinien 12 oder das Überschreiten des Fahrbahnrands, welcher insbesondere dem Übergang von Asphalt und Straßenbankett 9 entspricht, erkannt werden. Diese Daten werden beispielsweise bereits in einem sogenannten Lane-Departure-Warnin-Assistent oder Lane-Keeping-Assistent genutzt. Insbesondere werden dabei Bildsequenzen aufgenommen. Beim Anlernen einer Bilddaten-Auswertungssoftware wird ausgenutzt, dass die unterschiedlichen Bankettarten in den Bildsequenzen der Kameradaten spezifische Bildmuster erzeugen, welche den jeweiligen Bankettarten zugeordnet werden können und diese somit voneinander differenzieren. Nach dem Training kann die Bildbearbeitungs-Software die Messdaten, welche während der Fahrt mit der nach vorne gerichteten Kamera 4 erfasst worden sind, wie bereits beschrieben, den unterschiedlichen Bankettarten zuordnen beziehungsweise in diese klassifizieren.

Ferner kann mit Hilfe der Raddrehzahlsensoren 5 auf die Rauigkeit des Untergrunds rückgeschlossen werden. Diese Daten können unter anderem zur Unterstützung eines Antiblockiersystems oder eines dynamischen Stabilitätssystems oder zur Vermeidung von Rasseln und Brummen in Getrieben dienen. Diese Raddrehzahlsensoren 5 nehmen dabei insbesondere Sensormessdaten auf, welche einem zeitlichen Verlauf der Raddrehzahl der vier Räder 7 des Kraftfahrzeugs 1 entsprechen. Bei einer Fahrt auf einer rauen Oberfläche, wie dies zum Beispiel bei der Bankettfahrt 8 stattfindet, schwankt der zeitliche Verlauf dieser Raddrehzahlsensor-Messdaten stark, obwohl die Fahrzeuggeschwindigkeit während der Bankettfahrt 8 praktisch unverändert bleibt. Beim Anlernen einer Raddrehzahldaten-Auswertungssoftware wird ausgenutzt, dass die unterschiedlichen Bankettarten spezifische Muster beziehungsweise spezifische Schwankungen der zeitlichen Verläufe der Raddrehzahlsensor-Messdaten erzeugen, welche den jeweiligen Bankettart zugeordnet werden können, und diese somit voneinander differenzieren. Viele der Bankettoberflächen mit hohem Reibwert, beispielsweise Rüttelstreifen aus Betonplatten, Fahrstreifenmarkierungslinien 12, Rasengittersteine und dergleichen, weisen zudem regelmäßige Strukturen auf, welche sich in den Sensormessdaten der Raddrehzahlsensoren 5 wiederspiegeln. Nach dem Training kann die Raddrehzahldaten-Auswertungssoftware die Messdaten, welche während der Fahrt mit den Raddrehzahlsensoren 5 erfasst worden sind, wie oben beschrieben, den unterschiedlichen Bankettarten zuordnen beziehungsweise in diese klassifizieren.

Ferner ist es ermöglicht, dass mit Hilfe der Höhenstandssensoren 6, beispielsweise aus einem Vertikalregelsystem des Kraftfahrzeugs 1, die Radbewegungen in vertikaler Richtung erfasst und mit deren Hilfe somit auch auf die Rauigkeit des Untergrunds zurückgeschlossen werden kann. Die Sensormessdaten der Höhenstandssensoren 6 sind zeitliche Verläufe der Höhenstände der vier Räder 7 des Kraftfahrzeugs 1. Auf rauem Untergrund schwankt der zeitliche Verlauf dieser Sensormessdaten. Beim Anlernen einer Höhenstandsdaten-Auswertungssoftware wird ausgenutzt, dass die unterschiedlichen Bankettarten spezifische Muster beziehungsweise spezifische Schwankungen der zeitlichen Verläufe der Höhenstandssensor-Messdaten erzeugen, welche den jeweiligen Bankettarten zugeordnet werden können, und diese somit voneinander differenzieren. Viele der Bankettoberflächen mit hohem Reibwert, beispielsweise Rüttelstreifen aus Betonplatten, Fahrstreifenmarkierungslinien 12, Rasengittersteine und dergleichen, weisen zudem regelmäßige Strukturen auf, welche sich in den Sensormessdaten der Höhenstandssensoren 6 wiederspiegeln. Nach dem Training kann die Höhenstandsdaten-Auswertungssoftware die Messdaten, welche während der Fahrt mit den Höhenstandssensoren 6 erfasst worden sind, wie oben beschrieben, den unterschiedlichen Bankettart zuordnen beziehungsweise in diese klassifizieren.

Zur Klassifizierung, ob eine Bankettfahrt 8 vorliegt oder nicht, werden auch die Messdaten der Raddrehzahlsensoren 5 und/oder den Messdaten der Höhenstandssensoren 6 der linken Räder 7 und der rechten Räder 7 miteinander verglichen. Wenn die Messdaten der Raddrehzahlsensoren 5 und/oder die Messdaten der Höhenstandssensoren 6 sowohl der linken Räder 7 als auch der rechten Räder 7 auf einen rauen Untergrund hindeuten, dann fährt das Kraftfahrzeug 1 sehr wahrscheinlich nicht auf dem Straßenbankett 9, sondern auf einem Kopfstein, Feldweg oder einer anderen Schlechtwegstrecke. Wenn die Messdaten der Raddrehzahlsensoren 5 und/oder die Messdaten der Höhenstandssensoren 6 entweder der linken Räder 7 und der rechten Räder 7 auf einen rauen Untergrund hindeuten, dann fährt das Kraftfahrzeug 1 potentiell entweder mit den linken Rädern 7 oder mit den rechten Rädern 7 im Straßenbankett 9. Ob dies kritisch ist, muss, wie oben beschrieben, mit Hilfe der jeweiligen Auswertungs-Software ermittelt werden.

Potentiell kritische Sondersituationen, wie zum Beispiel eine Fahrbahn 13 aus Kopfsteinpflaster und Straßenbankett 9 aus Gras oder Sand, können über gleichzeitige Klassifizierung der Oberflächen von der Fahrbahn 13 und dem Straßenbankett 9 mit Hilfe des oben beschriebenen Verfahrens erfolgen.

Spezifische Strukturen auf der Fahrbahnoberfläche, welche durch zum Beispiel Reflexionen, Schattenwurf und Spuren erzeugt werden, können ebenfalls zu einer Falscherkennung der Bankettfahrt 8 durch die Kamera 4 führen. Da auch für diese spezifischen Strukturen auf der Fahrbahnoberfläche Lerndaten erzeugt werden können, kann die Bilddaten-Auswertungssoftware der Kamera 4 auf diese so trainiert werden, dass diese spezifischen Strukturen als unkritisch klassifiziert werden. Die Falscherkennung einer Bankettfahrt 8 bei spezifischen Strukturen auf der Fahrbahnoberfläche kann so verhindert werden.

Unebenheiten in der Fahrbahnoberfläche, wie zum Beispiel Gullideckel, Straßenschäden, Teernähte, starke Wellen im Asphalt oder in den Asphalt eingelassenen Bott Dots können ebenfalls zu einer Falscherkennung der Bankettfahrt 8 durch die Raddrehzahlsensoren 5 führen. Da auch diese Unebenheiten spezifische Muster von Messdaten erzeugen, können die Raddrehzahl-Auswertungssoftware und/oder Höhenstands-Auswertungssoftware auf diese so trainiert werden, dass diese als unkritisch klassifiziert werden. Die Falscherkennung einer Bankettfahrt 8 bei Unebenheiten in der Fahrbahnoberfläche kann so verhindert werden.

Insgesamt zeigt die Erfindung ein Verfahren zum Klassifizieren von Bankettarten.

### Bezugszeichenliste

- 1: Kraftfahrzeug
- 2: Assistenzsystem
- 3: elektronische Recheneinrichtung
- 4: Kamera
- 5: Raddrehzahlsensor
- 6: Höhenstandssensor
- 7: Rad
- 8: Bankettfahrt
- 9: Straßenbankett
- 10: Steuersignal
- 11: Funktionseinheit
- 12: Fahrstreifenmarkierungslinie
- 13: Fahrbahn

## Patentansprüche

1. Verfahren zum Betreiben eines Assistenzsystems (2) eines Kraftfahrzeugs (1), bei welchem mittels zumindest einer Erfassungseinrichtung (4, 5, 6) des Assistenzsystems (2) eine Bankettfahrt (8) des Kraftfahrzeugs (1) auf einem Straßenbankett (9) erfasst wird, und bei welchem in Abhängigkeit von der erfassten Bankettfahrt (8) ein Steuersignal (10) zum Eingriff in eine Funktionseinheit (11) des Kraftfahrzeugs (1) mittels einer elektronischen Recheneinrichtung (3) des Assistenzsystems (2) erzeugt wird,
**dadurch gekennzeichnet, dass**
das erfasste Straßenbankett (9) bezüglich einer Bankettart ausgewertet wird und in Abhängigkeit von der bestimmten Bankettart eine kritische oder eine unkritische Bankettfahrt (8) für das Kraftfahrzeug (1) bestimmt wird und das Steuersignal (10) nur bei einer kritischen Bankettfahrt (8) erzeugt wird.

2. Verfahren nach Anspruch 1,
**dadurch gekennzeichnet, dass**
mittels eines maschinellen Lernens der elektronischen Recheneinrichtung (3) das Straßenbankett (9) bezüglich der Bankettart ausgewertet wird.

3. Verfahren nach Anspruch 1 oder 2,
**dadurch gekennzeichnet, dass**
mittels einer Kamera (4) als Erfassungseinrichtung (4, 5, 6) das Straßenbankett (9) erfasst wird.

4. Verfahren nach Anspruch 3,
**dadurch gekennzeichnet, dass**
auf Basis von unterschiedlichen Bildmustern der Bankettarten eine Auswertung bezüglich der Bankettarten durchgeführt wird.

5. Verfahren nach einem der vorhergehenden Ansprüche,
**dadurch gekennzeichnet, dass**
mittels zumindest zweier Raddrehzahlsensoren (5) an unterschiedlichen Rädern (7) des Kraftfahrzeugs (1) als Erfassungseinrichtung (4, 5, 6) das Straßenbankett (9) erfasst wird.

6. Verfahren nach Anspruch 5,
**dadurch gekennzeichnet, dass**
auf Basis von zeitlichen Verläufen der zumindest zwei Raddrehzahlsensoren (5) und durch Vergleich der zeitlichen Verläufe eine Auswertung bezüglich der Bankettarten durchgeführt wird.

7. Verfahren nach einem der vorhergehenden Ansprüche,
**dadurch gekennzeichnet, dass**
mittels zumindest zweier Höhenstandssensoren (6) an unterschiedlichen Rädern (7) des Kraftfahrzeugs (1) als Erfassungseinrichtung (4, 5, 6) das Straßenbankett (9) erfasst wird.

8. Verfahren nach einem der vorhergehenden Ansprüche,
**dadurch gekennzeichnet, dass**
mittels zumindest zweier Höhenstandssensoren (6) und/oder zweier Radrehzahlsensoren (5) an gegenüberliegenden Rädern (7) des Kraftfahrzeugs (1) als Erfassungseinrichtung (4, 5, 6) das Straßenbankett (9) erfasst wird.

9. Verfahren nach einem der vorhergehenden Ansprüche,
**dadurch gekennzeichnet, dass**
eine Fahrbahnoberfläche einer Fahrbahn (13), auf welcher sich das Kraftfahrzeug (1) befindet, erfasst wird und die Fahrbahnoberfläche bei der Auswertung der Bankettfahrt (8) berücksichtigt wird.

10. Assistenzsystem (2) für ein Kraftfahrzeug (1), mit zumindest einer elektronischen Recheneinrichtung (3) und mit einer Erfassungseinrichtung (4, 5, 6), wobei das Assistenzsystem (2) zum Durchführen eines Verfahrens nach einem der Ansprüche 1 bis 9 ausgebildet ist.
